# EUROPEAN PATENT APPLICATION

(11) **EP 4 178 019 A1**
(43) Date of publication of application: **10.05.2023**
(21) Application number: 21831578.6
(22) Date of filing: 02.07.2021
(51) Int. Cl.: H01M 50/213, H01M 50/244, H01M 50/247, H01M 50/258, H01M 10/613, H01M 10/6235, H01M 10/643, H01M 10/653, H01M 10/659

(54) **BATTERY PACK, AND MANUFACTURING METHOD THEREFOR**

(30) Priority: 03.07.2020 CN 202010631670; 03.07.2020 CN 202021277330 U
(71) Applicant: Positec Power Tools (Suzhou) Co., Ltd, Suzhou, Jiangsu 215123 (CN)
(72) Inventor: WANG, Liangjun, Suzhou, Jiangsu 215123 (CN); DENG, Chunying, Suzhou, Jiangsu 215123 (CN); MA, Ruifei, Suzhou, Jiangsu 215123 (CN)
(74) Representative: Dentons UK and Middle East LLP
(86) International application number: PCT/CN2021/104269
(87) International publication number: WO 2022/002255

(57) **Abstract**

Disclosed are a battery pack and a manufacturing method therefor. The battery pack comprises: a battery module, comprising several cells, wherein the cells are electrically connected to each other, and each cell comprises an outer side face in the direction of longitudinal extension thereof; an adapter portion, for establishing mechanical and electrical connection between an electric tool and the battery pack; a holder, wherein an accommodating cavity is internally formed in the holder, and the cells are at least partially received in the accommodating cavity; and a filler, which wraps the outer side faces of the cells, is located at an inner side of the accommodating cavity and is used for transferring heat generated by the cells out of the accommodating cavity. The outer side faces of the cells are completely accommodated in the accommodating cavity, and the ratio of the length along which the filler is set in the lengthwise direction of the cells to the length of the cells is not less than 30%.

## Description

### BACKGROUND

### Technical Field

The present invention relates to the technical field of electric tools, in particular to a battery pack and a manufacturing method therefor.

### Related Art

A battery pack is generally a battery module composed of a plurality of cells connected in series or in parallel. Further, a plurality of battery modules can also be connected in series or in parallel to form a cell group with a certain voltage and capacity. The cells in the battery pack will generate heat during discharging. If the heat cannot be dissipated in time, which will affect the normal use of the battery pack, weaken the discharge capacity of the battery pack, shorten the life of the battery pack, and even cause safety accidents.

The battery pack is required to have good heat dissipation performance. In the related art, one way is to use air to dissipate heat. Specifically, a relatively large air flowing clearance is set between the cells and a holder, and a negative pressure air duct communicated with the clearance is set in the battery pack. However, the above-mentioned heat dissipation method for the cells not only increases the volume of the battery pack, but also is not conducive to waterproofing for the battery pack.

In addition, another way in the related art is to arrange a heat-absorbing material outside the cells to dissipate heat. Specifically, the heat-absorbing material is arranged at peripheries of the cells, and at the same time, parts such as a plastic cover gasket also need to be added to seal and assemble the heat-absorbing material. The above way overall has a relatively complex structure, and the process cost is relatively high.

### SUMMARY

In order to overcome the shortcomings in the related art, the present invention provides a battery pack and a manufacturing method therefor. By means of optimizing a heat dissipation structure of cells, heat generated by discharging of the cells can be effectively transferred, thus increasing the discharge capacity of the cells, and prolonging the service time and service life of the battery pack.

The foregoing objective of the present invention may be achieved by using the following technical solutions:
A battery pack is provided, including: a battery module, including several cells, where the cells are electrically connected to each other, and each cell includes an outer side face in a direction of longitudinal extension thereof; an adapter portion, for establishing mechanical and electrical connection between an electric tool and the battery pack; a holder, where an accommodating cavity is internally formed in the holder, and the cells are at least partially received in the accommodating cavity; and a filler, which wraps the outer side faces of the cells, is located at an inner side of the accommodating cavity and is used for transferring heat generated by the cells out of the accommodating cavity, where the outer side faces of the cells are completely accommodated in the accommodating cavity, and a ratio of a length along which the filler is set in a lengthwise direction of the cells to a length of the cells is not less than 30%.

Further, a ratio of the length along which the filler is set in the lengthwise direction of the cells to the length of the cells is not less than 50%.

Further, the holder is of an integrated structure.

Further, the holder includes a first sub-holder and a second sub-holder; the accommodating cavity includes a first accommodating cavity disposed in the first sub-holder, and a second accommodating cavity disposed in the second sub-holder; the first accommodating cavity and the second accommodating cavity are respectively used for accommodating at least part of the cells; and when the first sub-holder and the second sub-holder are abutted towards each other, the first accommodating cavity and the second accommodating cavity are communicated with each other, and wrap the cells along the lengthwise direction of the cells.

Further, the accommodating cavities are enclosed by an inner wall of the holder and are independent of each other; and each cell is correspondingly accommodated in the independent accommodating cavities respectively.

Further, a sealing element that is in contact with the outer side faces of the cells is arranged inside the accommodating cavity; a radial width of the sealing element is greater than or equal to a clearance between the outer side faces of the cells and the inner wall of the accommodating cavity; and the filler is located between the first sub-holder or the second sub-holder and the sealing element in the lengthwise direction of the cells.

Further, each cell is provided with a main body for longitudinal extension; the main body is distributed with an anode section and a cathode section along the lengthwise direction; and the filler is arranged in a clearance between the cathode section and/or the anode section and the inner wall of the accommodating cavity.

Further, several positioning elements extending towards the cells are convexly arranged on the inner wall of the accommodating cavity; and the positioning elements abut against the outer side faces of the cells.

Further, the positioning elements extend longitudinal along the cells; a mounting slot is formed between adjacent positioning elements; and the filler is arranged in the mounting slot.

Further, the filler includes at least 2 different kinds of phase change materials, and melting ranges of the phase change materials are at least partially different.

Further, the filler includes a phase change material that is in a solid state at a normal temperature; and the phase change material changes from the solid state to a liquid state in a heat-absorbing process, or maintains the solid state.

Further, a melting range of the phase change material is between 40°C and 70°C.

Further, a material of the filler includes a heat-conducting glue, a thermal conductivity of the heat-conducting glue is 1 to 3; and a unilateral thickness of the heat-conducting glue is 0-0.5 mm.

A manufacturing method for the above-mentioned battery pack is provided, in a case that the filler is in a solid state, the manufacturing method including:
assembling the filler with one of the cells and the holder in a predetermined manner to form a first assembly; and
assembling the first assembly with the other one of the cells and the holder to form a second assembly.

According to the battery pack and the manufacturing method therefor provided in the implementations of this application, by means of optimizing a heat dissipation structure of cells and filling the clearance between the cells and the holder with the filler, heat generated by discharging of the cells can be effectively transferred, thus increasing the discharge capacity of the cells, and prolonging the service time and service life of the battery pack.

### BRIEF DESCRIPTION OF THE DRAWINGS

The present invention is further described below with reference to the accompanying drawings and implementations.
FIG. 1 is an exploded diagram of a battery pack provided in an implementation of this application;
FIG. 2 is a lengthwise sectional view of cells, a filler, and a single accommodating cavity in a holder provided in one implementation of this application;
FIG. 3 is an A-A transversely sectional view of the cells, the filler, and the single accommodating cavity in the holder provided in FIG. 2;
FIG. 4 is a schematic structural diagram of a single accommodating cavity in a holder provided in one implementation of this application;
FIG. 5 is a schematic structural diagram of cooperation of cells, a filler, and a single accommodating cavity in a holder provided in another implementation of this application;
FIG. 6 is a transversely sectional view of the single accommodating cavity in the holder with the filler provided in FIG. 5;
FIG. 7 is a lengthwise sectional view of the single accommodating cavity in the holder with the filler provided in FIG. 5;
FIG. 8 is another lengthwise sectional view of the single accommodating cavity in the holder with the filler provided in FIG. 5;
FIG. 9 is a lengthwise sectional view of cells, a filler, and a single accommodating cavity in a holder provided in another implementation of this application;
FIG. 10 is an exploded diagram of a battery pack provided in another implementation of this application;
FIG. 11 is a lengthwise sectional view of the single accommodating cavity in the holder with the filler provided by the battery pack in FIG. 10;
FIG. 12 is a schematic comparison diagram of temperature rise curves of cells; and
FIG. 13 is a flowchart of steps of a manufacturing method for a cell provided in an implementation of this application.

List of Reference Numerals:
1: cell; 11: connection sheet;
2: holder; 20: accommodating cavity; 21: first sub-holder; 22: second sub-holder; 220: limiting step; 23: positioning element; 24: mounting slot; 241: first mounting slot; 242: second mounting slot;
3: filler; 31: first heat-conducting glue; 32: second heat-conducting glue;
41: upper cover; 42: lower cover;
5: circuit board;
6: sealing element;
26: open end; 27: first limiting portion; 28: second limiting portion.

### DETAILED DESCRIPTION

The technical solution of the present invention will be described in detail below with reference to the accompanying drawings and implementations. It should be understood that these implementations are only used to illustrate the present invention and not to limit the scope of the present invention. After reading the present invention, various equivalent modifications made by those skilled in the art to the present invention shall fall within the scope defined by the appended claims of this application.

It should be noted that, when a component is referred to as "being configured to" another component, the component may be directly on the another component, or there may be an intermediate component. When a component is considered to be "being connected to" another component, the component may be directly connected to the another component, or an intervening component may also be present. The terms "vertical", "horizontal", "upper", "down", "left", "right" and similar expressions used in this specification are only for purposes of illustration but not indicate a unique implementation.

Unless otherwise defined, meanings of all technical and scientific terms used in this specification are the same as those usually understood by a person skilled in the art to which this application belongs. In this specification, terms used in the specification of this application are merely intended to describe objectives of the specific embodiments, but are not intended to limit this application. The term "and/or" used in this specification includes any and all combinations of one or more related listed items.

Air is a bottleneck that hinders the heat transfer of a cell. The air can be reduced by reducing the thickness of an interface to reduce the thermal resistance. However, the air still exists more or less since the roughness of the interface is limited by a process and a cell assembling process.

According to this application, by means of optimizing a heat dissipation structure of cells and filling a clearance between the cells and a holder with a filler, heat generated by discharging of the cells can be effectively transferred, thus increasing the discharge capacity of the cells, and prolonging the service time and service life of the battery pack. A test shows that the service life of the cells is increased year on year by 25% by means of optimizing the heat dissipation structure of the cells in this application.

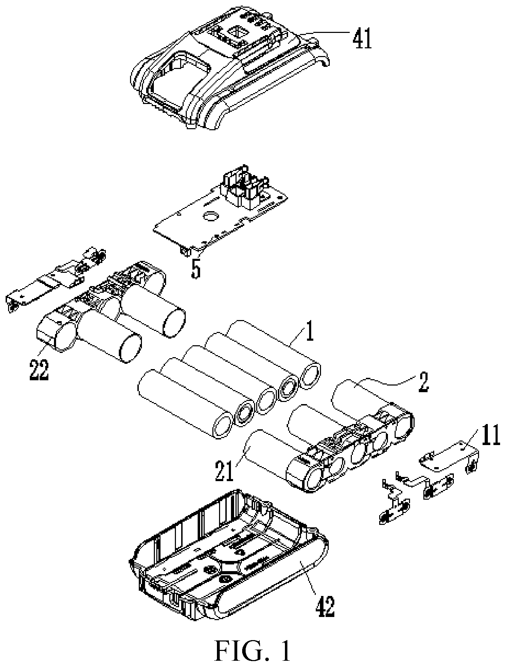

Comprehensively referring to FIG. 1 to FIG. 9 or FIG. 10 to FIG. 11, an implementation of this specification of this application provides a battery pack. The battery pack mainly includes cells 1, a holder 2, a filler 3 filling a space between the cells 1 and the holder 2, a circuit board 5, an adapter portion for establishing mechanical and electrical connection between the battery pack and an electric tool, other necessary electrical and mechanical connection mechanisms, and the like. The battery pack may further include a housing. The holder 2 may be located in the housing. In addition, the holder 2 may also serve as a shell in part or in whole, which is not specifically limited in this application.

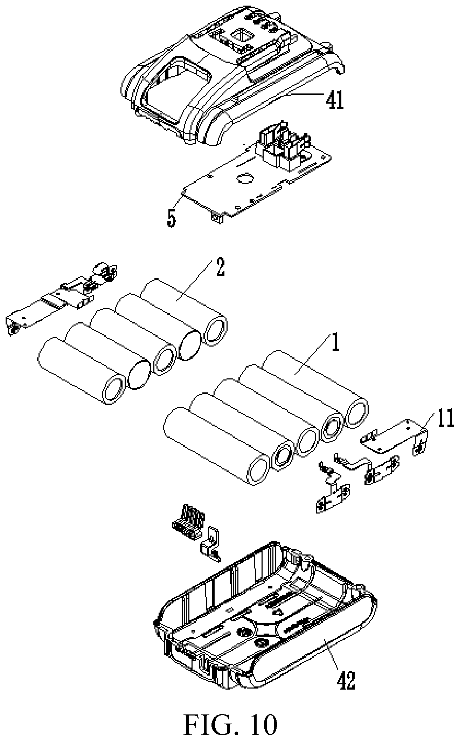

As shown in FIG. 1 or FIG. 10, in this implementation, the housing may include an upper cover 41 and a lower cover 42 that are abutted together. The upper cover 41 and the lower cover 42 are abutted together to form a relatively closed cavity for accommodating the cell 1, the holder 2, the circuit board 5, and the like.

In this implementation, each cell 1 may be of a column shape as a whole, for example, a cylindrical shape. Of course, the shape of the cell 1 may also be adaptively adjusted according to actual needs, for example, it may be a cuboid, or an approximate cuboid, or even other specially-shaped structure. The shape and structure of the cell 1 are not specifically limited in this application. In this specification, a cylindrical cell 1 is mainly taken as an example, and the shapes of other cells 1 may refer to this application by analogy. Specifically, the cell 1 may include a main body extending along a longitudinal direction. The main body is provided with an anode section and a cathode section along the lengthwise direction.

The number of the cells 1 and the series-parallel connection manner between the cells 1 may be adjusted according to a voltage of the cell 1 itself and different nominal voltages, which are not specifically limited in this application. Specifically, the cells 1 may be connected in series, or in parallel, or in series and parallel to form battery modules through connection sheets 11. The number of the battery modules may be one or two or more.

In this implementation, the holder 2 is mainly used for mounting the cells 1, and several accommodating cavities 20 for mounting the cells 1 are internally formed in the holder 2. Each cell 1 is at least partially received in the corresponding accommodating cavity 20. Specifically, the cell 1 may be partially located in the accommodating cavity 20; or, the cell 1 may also be completely located in the accommodating cavity 20.

In this implementation, the filler 3 is provided on an outer side face of each cell 1 and located on an inner side of the accommodating cavity 20. The filler 3 is used for transferring heat generated by the cell 1 out of the accommodating cavity 20.

Generally, for a battery pack in which the cells 1 are assembled through the holder 2, there are more or less some clearances between the cells 1 and the holder 2, and air exists these clearances before the filler 3 is provided. Air has high thermal resistance and small thermal conductivity, about 0.023 (W/m.k), so air is a poor conductor of heat.

In order to ensure that the filler 3 can effectively conduct the heat of the cell 1 after replacing the air, the parameters such as the thermal conductivity and a filling length of the filler 3 may be reasonably set. According to the thermal resistance θ=L/(λS) (where: λ is the thermal conductivity; L is a length of a material conduction path (which is the length of the cell in a radial direction in this embodiment); and S is a heat transfer area), it can be seen from the above that the ability of an object to hinder heat flow conduction is in direct proportion to the length of the conduction path, in inverse proportion to a cross-sectional area through which the object passes, and in inverse proportion to the thermal conductivity of the material.

In this implementation, a ratio of a length along which the filler 3 is set in a lengthwise direction of the cell 1 to the length of the cell 1 is not less than 30%. Further, the thermal resistance is larger if the length of the material in the radial direction is greater. In order to better ensure the heat exchange effect between the filler 3 and the cell 1, the length of the filler 3 in the longitudinal direction may be appropriately increased. Specifically, a ratio of the length along which the filler 3 is set in the lengthwise direction of the cell 1 to the length of the cell 1 is not less than 50%.

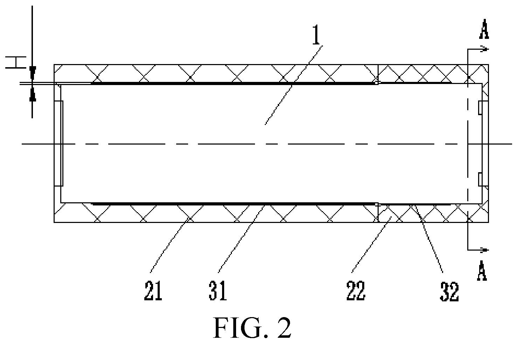

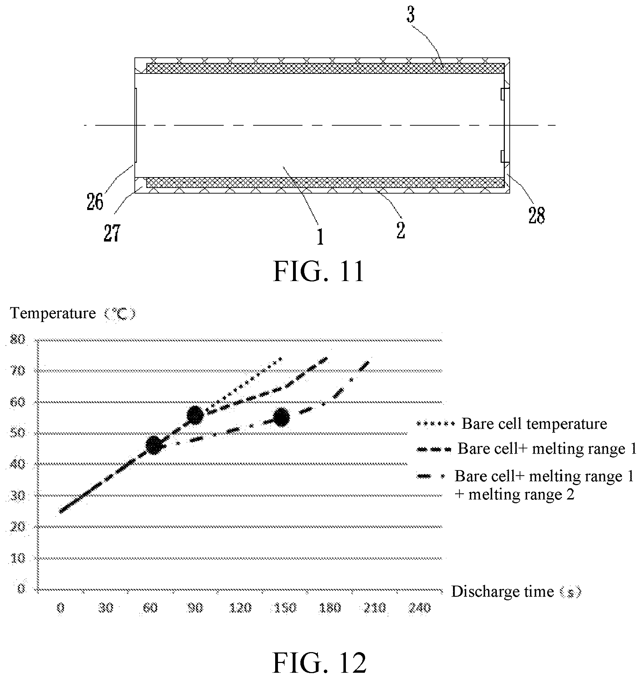

In some implementations, as shown in FIG. 10 and FIG. 11, the holder 2 may be an integral holder. Or, in some other implementations, as shown in FIG. 2 to FIG. 9, the holder 2 may also be a split type holder.

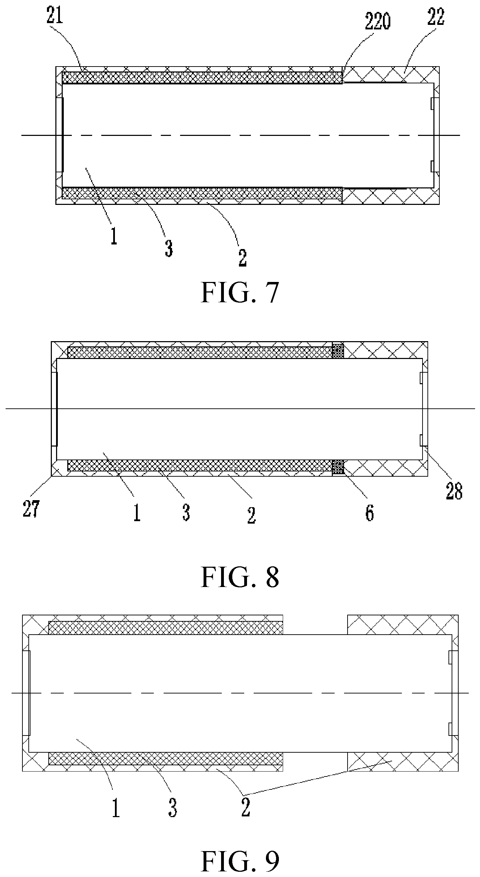

As shown in FIG. 2 or FIG. 7, the holder 2 may include a first sub-holder 21 and a second sub-holder 22 when the holder 2 is the split type holder. The accommodating cavity 20 may include several first accommodating cavities disposed in the first sub-holder 21, and several second accommodating cavities disposed in the second sub-holder 22; the first accommodating cavities and the second accommodating cavities are respectively used for accommodating at least part of the cells 1; and when the first sub-holder 21 and the second sub-holder 22 are abutted towards each other, the first accommodating cavities and the second accommodating cavities correspond to each other one to one, and the outer side faces of the cells in their longitudinal direction are completely accommodated in the accommodating cavities. Of course, the complete accommodating here means that the cells are basically accommodated in the accommodating cavities in their lengthwise direction. Basically, unavoidable clearances caused by assembling clearances or process production and the like are allowed.

For the split-type holder, as shown in FIG. 2 or FIG. 7, when the first sub-holder 21 and the second sub-holder 22 are abutted towards each other, the first accommodating cavities and the second accommodating cavities are communicated with each other and may wrap the cells 1, without any clearance, along the lengthwise direction of the cells 1.

The battery pack will be described in detail below with reference to specific implementations and application scenarios.

In one implementation, each cell 1 has a main body for longitudinal extension, and an anode section and a cathode section are distributed at two ends of the main body of the cell 1 along the lengthwise direction; and the filler 3 is arranged in a clearance between the cathode section and/or the anode section and the accommodating cavity 20.

In this implementation, generally, a length of the cathode section is greater than that of the anode section. Correspondingly, a depth of the accommodating cavity of the sub-holder disposed outside the cathode terminal along the lengthwise direction of the cell 1 is greater than a depth of the accommodating cavity of the sub-holder disposed outside the anode section along the lengthwise direction of the cell 1. According to different connection manners of the cells 1, the accommodating cavities with different depths may be correspondingly arranged in the first sub-holder 21 or in the second sub-holder 22. As shown in FIG. 1, when the cells 1 are connected in series, the first accommodation cavities with different depths may be arranged in the first sub-holder 21 in a spacing manner. Similarly, the second accommodating cavities with different depths may also be arranged in the second sub-holder 22 in a spacing manner.

The accommodating cavities with greater depths among the first accommodating cavities or the second accommodating cavities may be wrapped outside the cathode section with zero clearance through first heat-conducting glue 31. In addition, the accommodating cavities with less depths among the first accommodating cavities or the second accommodating cavities may be wrapped outside the anode section of the cells 1 with zero clearance through second heat-conducting glue 32. The first heat-conducting glue 31 and the second heat-conducting glue 32 may be the same or different. The zero-clearance wrapping may mean that an inner wall of the holder 2 (including the first accommodating cavity and the second accommodating cavity) may be partially or completely attached to an outer wall of the cell 1 (including the cathode section and the anode section), and there is no air clearance along the radial direction between the holder and the cell at their attached position.

The above-mentioned implementation in which the holder 2 is divided into the first sub-holder 21 and the second sub-holder 2 which are abutted against each other is particularly suitable for a scenario where the sizes of the anode section and the cathode section of the cell 1 are different. Specifically, for some cells 1, the anode sections are radially convex relative to the cathode sections. If the heat-conducting glue is put into the anode sections, the heat-conducting glue is likely to overflow. For these cells 1, the cathode sections may be inserted into the accommodating cavities, having greater depths, of a certain sub-holder first, and then the anode sections are sleeved in the accommodating cavities, having less depths, of the other sub-holder.

In addition, when the length of the cathode section is much longer than that of the anode section, the heat-conducting effect achieved by the anode section is relatively limited. At this time, the filler 3 between the anode section and the inner wall of the accommodating cavity 20 may be omitted. For example, when the length of the cathode section is more than 3 times that of the anode section, the filler 3 outside the anode section may be omitted. In other words, the filler 3 may be provided only in the clearance between the cathode section and the inner wall of the accommodating cavity 20.

As shown in FIG. 2, in some implementations, the holder 2 may have a cylindrical wall that basically matches the shape of the cell 1. The cell 1 and the inner wall of the accommodating cavity 20 may be in clearance fit to form a predetermined clearance H. Of course, such a situation that the cell 1 and the accommodating cavity 20 are in transition fit and interference fit is not excluded. In this specification of this application, the clearance fit is taken as an example for detailed description, and other situations can be referred to by analogy according to the content disclosed in this application. Specifically, the shape of the accommodating cavity 20 may substantially match the shape of the cell 1. For example, when the cell 1 is cylindrical as a whole, the accommodating cavity 20 of the holder 2 may be hollowly cylindrical.

For the above-mentioned implementation in which the accommodating cavity 20 of the holder 2 matches the cell 1, it mainly aims at a case where the filler 3 is in a solid state and the filler 3 is continuously distributed along the lengthwise direction of the cell 1, which is beneficial to uniform heat exchange between the holder and the cell.

In some other implementations, for example, when the filler 3 is liquid, the shape of the accommodating cavity 20 may match the shape of the cell 1, or may not match the shape of the cell 1. Specifically, a cross section of the accommodating cavity 20 may be any regular or irregular shape, which is not specifically limited in this application.

As shown in FIG. 9, in some other implementations, gaps are reserved in the first accommodating cavities and the second accommodating cavities along the lengthwise direction of the cells 1, and the outer side faces of the cells 1 are exposed from the gaps. The holder 2 is discontinuously distributed in the lengthwise direction of the cells 1. The shape and size of the accommodating cavity 20 may be adaptively adjusted according to whether the filler 3 is filled between the holder 2 and the cells 1, and different types and the like of the filler 3. Specifically, this application does not specifically limit this.

In some implementations, when the heat generated by the cell 1 needs to be transferred to the outside through the holder 2 as soon as possible, the holder 2 may be made of a heat-conducting material, which can transfer the heat on the cell 1 to the outside in time. For example, in order to ensure that the holder 2 has good thermal conductivity, the heat-conducting material may be selected from materials with higher thermal conductivity.

As shown in FIG. 2, in this implementation, the filler 3 wraps the outer side face of each cell 1 and is located on the inner side of the accommodating cavity 20, so as to transfer the heat generated by the cell 1 out of the accommodating cavity 20. For example, when a unilateral predetermined clearance formed on one side between the outer side face of the cell 1 and the inner side of the accommodating cavity 20 of the holder 2 is H, the unilateral thickness of the filler 3 may also be H. Specifically, a material of the filler 3 may include heat-conducting glue or a phase change material, and the like. According to different specific forms of the material of the filler 3, the way of transferring the heat of the cell 1 is also different. When the material of the filler 3 is the heat-conducting glue, the filler 3 serves as an intermediate medium for transferring the heat of the cell 1 to the holder 2. When the material of the filler 3 is the phase change material, the filler 3 serves as a heat-absorbing medium for absorbing the heat generated by the cell 1.

In some implementations, when the material of the filler 3 is the heat-conducting glue, the heat-conducting glue may be provided between the holder 2 and the cell 1 by any one of manners of backing glue, a glue storage slot on the holder 2, and secondary injection molding. Specifically, the heat-conducting glue may be set in different ways according to different forms. For example, a solid flat heat-conducting glue grease sheet can be glued with the backing glue at the periphery of the cell 1 and is then in interference insertion into the cylindrical wall of the holder 2. Liquid glue may be pressed to the predetermined clearance H with the cell 1 when the cell 1 is mounted. Of course, when the predetermined clearance H is 0, a space for accommodating the liquid glue can also be formed by disposing a glue storage slot on the holder 2. In addition, the secondary injection molding manner is a process of molding a certain kind of plastic raw material in a primary plastic mold, taking out the molded part, putting the part into a mold for secondary molding, and then injecting the same kind or another kind of plastic material for molding. This process is the same as an encapsulation process for flexible glue.

In this implementation, the heat-conducting glue has a relatively high thermal conductivity. Specifically, the thermal conductivity may be between 1 and 3. When the material of the filler 3 is the heat-conducting glue, the core function of the filler 3 is to discharge the air in the predetermined clearance H formed between the cell 1 and the inner wall of the holder. The unilateral thickness of the heat-conducting glue is the same as the predetermined clearance H. For example, when the predetermined clearance is set to be greater than 0 and less than 0.5 mm, the unilateral thickness of the heat-conducting glue is also between 0 and 0.5 mm. It should be noted that the predetermined clearance H is theoretically half of a difference value between a diameter of the accommodating cavity 20 of the holder 2 and an outer diameter of the cell 1, but in actual mounting, considering a mounting error, there may be a certain deviation in the unilateral clearance, which may be greater than 0.5 mm.

In one implementation, the cell 1 may include a main body extending along the longitudinal direction. The main body is provided with an anode section and a cathode section along the lengthwise direction. The clearance formed between the main body of the cell 1 and the holder 2 may include a first clearance between the cathode section and the holder 2; and at least the first clearance is provided with the filler 3.

In this implementation, the cell 1 may be divided into a cathode section and an anode section in its lengthwise direction. where, the cathode section is a section of cell including a cathode, and the anode section is another section of cell including an anode. Generally, the cathode section is a cylindrical section with a regular shape and a relatively small diameter, and a radial size of the anode section is larger than that of the cathode section. At this time, the filler 3 may be provided only in the first clearance between the cathode section and the holder 2.

In one implementation, several positioning elements 23 extending towards the cells 1 are convexly arranged on the inner wall of the accommodating cavity 20. The positioning elements 23 abut against the outer side faces of the cells 1, and are used for performing circumferential positioning on the cells 1.

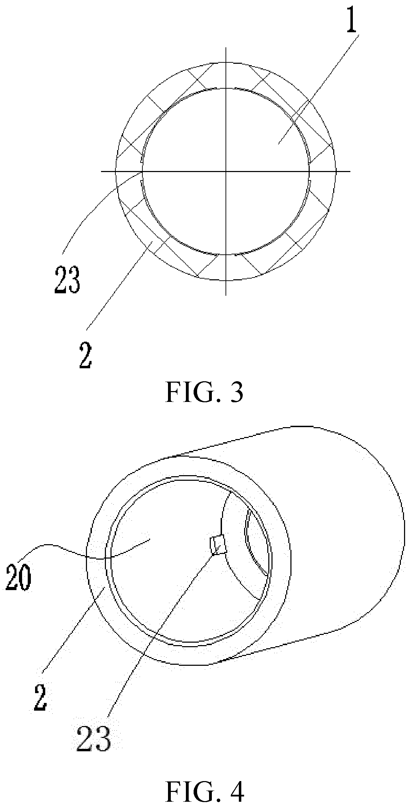

In this implementation, positioning elements 23 may also be provided on the holder 2 to position the cells 1. The positioning elements 23 can reliably ensure the positioning stability of the cells 1. As shown in FIG. 3 and FIG. 4, specifically, the positioning elements 23 may be a plurality of local rigid rib plates disposed at an end part of the holder 2, and the local rigid rib plates may be uniformly distributed along a circumferential direction in a spacing manner. For example, 4 local rigid rib plates may be uniformly arranged along the circumferential direction. When the cells 1 are mounted in the holder 2, the cells 1 are in contact with the local rigid rib plates in the circumferential direction, thereby achieving the circumferential positioning. Of course, the specific form of each positioning element 23 may be a hard material raised portion that is the same material as the holder 2, such as a plastic raised portion. The positioning elements 23 may circumferentially abut against the cells 1, so as to reliably position the cells 1 in the circumferential direction. Of course, the specific form and material of the positioning element 23 are not limited to the above examples in this specification of this application, and those skilled in the art can also make adaptive adjustments, which are not specifically limited in this application.

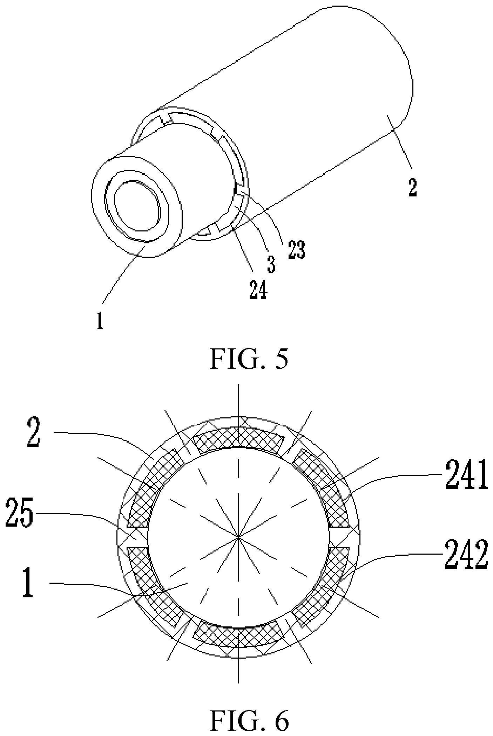

Referring to FIG. 5, FIG. 6, and FIG. 7, in some other implementations, the material of the filler 3 may include a phase change material that is in a solid state at a room temperature. The normal temperature generally refers to 25°C.

In these implementations, by filling the predetermined clearance H between the cells 1 and the holder 2 with the phase change material with a thermal conductivity of about 1 (W/m.k) and high heat-absorbing capability, the heat discharged from the cells 1 can be effectively absorbed. Specifically, as shown in FIG. 8, the form of the phase change material changes from the solid state to a liquid state during the heat-absorbing process; or, the phase change material maintains the solid state in the heat-absorbing process.

Specifically, the filler may be composed of phase change materials with different melting ranges (melting range refers to a melting point of a phase change material after organic matters are mixed, and the melting point is a temperature range which is referred to the melting range). The melting range of the phase change material is between 40°C and 70°C.

In this implementation, an ideal heat-absorbing effect can be achieved by optimizing the phase change material itself and the melting range of the phase change material.

Specifically, since it takes time for a material to conduct heat, the cell 1 instantly generates a large amount of heat during discharging with a large current. It is found via a test that it only takes about 1 min to change the temperature of the outer surface from 60°C to 75°C when a certain 18650 cell 1 is discharged at a working current of 30A at the room temperature. If the temperature of phase change is closer to a protection temperature of the cell 1 at about 75°C, the heat-absorbing efficiency is extremely low, in other words, the heat generated during the high-current discharge of the cell 1 cannot be absorbed in time.

In addition, with comprehensive reference to an outdoor working environment temperature of about 40°C, when selecting phase change materials whose melting ranges are at least partially different, one melting range may be close to the environment temperature, and the other melting range is less than the protection temperature of the cell 1. As shown in FIG. 12, the applicant finds that: in the case of phase change materials with at least 2 different melting ranges, a temperature rise curve of the cell 1 is gentler than that of the cell in the case of the phase change materials with a single melting range, which can delay the cell 1 to reach the protection temperature, in other words, the discharge time of the cell 1 can be effectively prolonged.

In this implementation, when the filler 3 adopts a phase change material, the phase change material changes from the solid state to a liquid state in a heat-absorbing process, or maintains the solid state.

In one implementation, the phase change material is disposed between the cell 1 and the holder 2 in the form of wrapping in a full circle.

In this implementation, the form of wrapping in a full circle may specifically be as follows: The phase change material may be in the shape of a ring running through in the circumferential direction, and is disposed between the cell 1 and the holder 2 with zero clearance. The form of wrapping in a full circle can effectively ensure a contact area between the cell 1 and the phase change material. At this time, the filler may adopt a phase change material with a single melting range, or a ready-made material formed by mixing phase change materials with at least two melting ranges.

As shown in FIG. 5 and FIG. 6, in one implementation, the positioning elements 23 extend along the lengthwise direction of the cells 1; a mounting slot 24 is formed between adjacent positioning elements 23, and the filler 3 is arranged in the mounting slot 24.

In this implementation, positioning elements 23 for longitudinal extension are arranged on the inner wall of the holder 2. On one hand, the positioning elements 23 can be used for performing circumferential positioning on the cells 1, and on the other hand, a plurality of isolated mounting slots 24 are formed between two adjacent positioning elements 23. After the positioning elements 23 are arranged on the holder 2, the phase change material is divided into a plurality of independent heat-absorbing regions with fan-shaped cross sections. On one hand, the structural stability of the phase change material can be improved, and the fitness between the phase change material and the cells 1 can be guaranteed to prevent the phase change material, especially a brittle phase change material, from cracking during use; and on the other hand, phase change materials with different melting ranges can be flexibly arranged in different mounting slots 24 to enhance the heat-absorbing effect of the phase change material.

In one specific implementation, the filler 3 may include at least 2 different kinds of phase change materials, the melting ranges of which are at least partially different, and different phase change materials are arranged in adjacent mounting slots 24.

In this implementation, the mounting slot 24 may include a first mounting slot 241 and a second mounting slot 242. The melting ranges of the phase change materials in the first mounting slot 241 and the second mounting slot 242 are different.
where, the number of the first mounting slots 241 may be multiple, and the number of the second mounting slots 242 may also be multiple. For example, in the drawings, the number of the first mounting slots 241 and the number of the second mounting slots 242 are 3 respectively. The first mounting slots 241 and the second mounting slots 242 may be distributed along the circumferential direction of the cells 1 in a spacing manner. When the melting ranges in the first mounting slots 241 and the second mounting slots 242 are different, the heat-absorbing efficiency can be improved, so as to improve the heat-absorbing effect of the phase change material and achieve effective control on the temperature rise of the cells 1.

As shown in FIG. 8 or FIG. 7, in the case where the phase change material changes from the solid state to the liquid state in the heat-absorbing process, the cells 1 cooperate with the holder 2 to form a sealed cavity for mounting the phase change material.

As shown in FIG. 7, two ends of the phase change material in the lengthwise direction can be sealed by the press fit between end parts of the holder 2 and the cells 1, so as to prevent such a phenomenon that there is phase change material liquid flows out from fitted end surfaces of the holder and the cells when the phase change material changes to the liquid or solid-liquid mixed state.

Specifically, the sealed cavity may be formed between the cells 1 and the holder 2 under the action of an axial pressing force. The phase change material is arranged in the sealed cavity to achieve sealing. As shown in FIG. 7, the phase change material is distributed in the cathode section with the relatively small diameter. The cathode section externally corresponds to the first sub-holder 21, and the anode section externally corresponds to the second sub-holder 2. An inner diameter of the second sub-holder 2 is less than that of the first sub-holder 21, so that a limiting step 220 is formed at abutted positions of the first sub-holder 21 and the second sub-holder 2. The cavity thickness of the sealed cavity for mounting the phase change material is the height of the limiting step 220. The sealed cavity may be formed by the cooperation of the inner wall of the first sub-holder 21, the outer wall of the cell 1, and the limiting step 220.

In addition, in order to further ensure the reliability of sealing, as shown in FIG. 8, a sealing element 6 may be provided on at least one end part of the phase change material, or a sealing element 6 may be provided at the abutted positions of the first sub-holder 21 and the second sub-holder 22. The sealing element 6 may be specifically in a form of an elastic sealing gasket, a radial width of which may be equal to or slightly greater than the predetermined clearance, so as to effectively seal the phase change material.

As shown in FIG. 8, in addition, a circumferential limiting element for circumferentially positioning the cell 1 may be formed at a position, close to the end part, on the holder 2. The circumferential limiting element may be a first limiting portion 27 formed on the side of the holder 2 closer to an open end 26. Specifically, for the structural form of the first limiting portion 27, reference may be made to the aforementioned positioning element 23, which will not be repeated in this application. Of course, the first limiting portion 27 may also be in other forms that can circumferentially position the cell 1, which is not specifically limited in this application. A second limiting portion 28 may be formed at a position, facing away from the open end 26, of the holder 2, and the second limiting portion 28 is used for axially positioning the cell 1. Specifically, the second limiting portion 28 may be a baffle plate provided at an end part of the holder 2.

When the filler 3 is a phase change material, the holder 2 can refer to the specific description of the above-mentioned implementation in which the filler 3 is the heat-conducting glue, which will not be repeated in this application. For example, when the length of the first sub-holder 21 is much greater than that of the second sub-holder 2, the phase change material in the second sub-holder 2 may also be omitted.

As shown in FIG. 10 and FIG. 11, when the phase change material remains in the solid state in the heat-absorbing process, it is not necessary to consider the tightness when the phase change material changes to the liquid state. In this case, the structure of the holder 2 can be further simplified. The holder 2 is an integral holder, and the accommodating cavities 20 are enclosed by the inner wall of the holder 2 and are independent of each other.

Specifically, the entire holder 2 may be a hollow cylinder; one end of the cylinder is provided as the open end 26, and the other end of the cylinder is provided with the second limiting portion 28 for axially limiting the cell 1. Specifically, the second limiting portion 28 may be a baffle plate at the end part of the holder 2, or may be in the form of a limiting step internally formed in the holder 2 to axially limit the cell 1. During assembling, the phase change material and the cell 1 may be mounted in the cylinder until they abut against the second limiting portion 28, thus achieving the mounting.

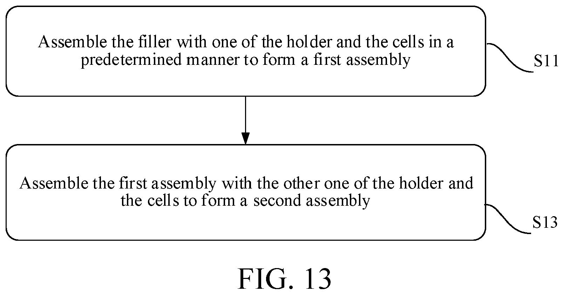

Referring to FIG. 13, based on the battery pack provided in the above implementations, this application also provides a manufacturing method for a battery pack. In the case where the filler 3 is in the solid state, the manufacturing method includes:
step S11: the filler 3 is assembled with one of the holder 2 and the cells 1 in a predetermined manner to form a first assembly; and
step S13: the first assembly is assembled with the other one of the holder 2 and the cells 1 to form a second assembly.

In this implementation, the case where the filler 3 is in the solid state is mainly introduced. The manufacturing method for the battery pack is mainly to assemble the filler 3 with one of the holder 2 and the cells 1 by means of injection molding, assembling, backing glue or the like to form the first assembly; subsequently assemble the first assembly with the remaining portion to form the second assembly; and finally, electrically connect a plurality of second assemblies, and put them into a housing to form a battery pack.

When the structure of the holder 2 and the specific arrangement of the sealing element 6 are different, there are certain differences in the manufacturing method for the cells 1.

The following description will be made by taking the holder 2 including the first sub-holder 21 and the second sub-holder 22 as an example. During specific manufacturing, the filler 3 can be mounted in the first sub-holder 21 to form the first assembly; then the cells 1 are inserted into the first assembly; and part of the cells 1 are exposed from the first sub-holder 21. Then, the second sub-holder 22 provided with the sealing element 6 sleeves the exposed cells 1 to form the second assembly. Subsequently, the plurality of second assemblies are electrically connected and put into the housing to form the battery pack.

On the whole, the manufacturing method for the battery pack has a simple process, low manufacturing cost, and high reliability, and is beneficial to improving the performance of the battery pack and reducing the cost of the battery pack at the same time.

In addition, in the case where the filler 3 is in the liquid state, the manufacturing method may be mainly to form the filler 3 between the cells 1 and the holder 2 by means of injection, smearing, or the like. Specifically, the manufacturing method may include: the cells 1 and the holder 2 are assembled to form a space for filling the filler 3; the liquid filler 3 is injected into the formed space; and subsequently, a plurality of assemblies are electrically connected and put into a housing to form a battery pack.

It should be noted that, in the descriptions of this application, terms "first" and "second" are only used to describe the objective and distinguish similar objects without a limitation on a sequence between the two, and cannot be understood as indicating or implying relative importance. In addition, in the descriptions of this application, unless otherwise noted, the meaning of "multiple" is two or more.

The foregoing implementations are all described in a progressive manner. For same or similar parts in the implementations, cross reference is made, and descriptions of each implementation focus on a difference from other implementations.

The foregoing descriptions are merely several implementations of the present invention. Although the implementations disclosed in the present invention are described above, the content of the implementations is only used to facilitate the understanding of the present invention, and is not intended to limit the present invention. Any person skilled in the art of the present invention can make any modification and change in the form and details of the implementations without departing from the spirit and scope of the present invention. However, the protection scope of the present invention should still be subject to the scope defined by the appended claims.

## Claims

1. A battery pack, comprising:
a battery module, comprising several cells, wherein the cells are electrically connected to each other, and each cell comprises an outer side face in a direction of longitudinal extension thereof;
an adapter portion, for establishing mechanical and electrical connection between an electric tool and the battery pack;
a holder, wherein an accommodating cavity is internally formed in the holder, and the cells are at least partially received in the accommodating cavity; and
a filler, which wraps the outer side faces of the cells, is located at an inner side of the accommodating cavity and is used for transferring heat generated by the cells out of the accommodating cavity,
wherein the outer side faces of the cells are completely accommodated in the accommodating cavity, and a ratio of a length along which the filler is set in a lengthwise direction of the cells to a length of the cells is not less than 30%.

2. The battery pack according to claim 1, wherein a ratio of the length along which the filler is set in the lengthwise direction of the cells to the length of the cells is not less than 50%.

3. The battery pack according to claim 1, wherein the holder is of an integrated structure.

4. The battery pack according to claim 1, wherein the holder comprises a first sub-holder and a second sub-holder; the accommodating cavity comprises a first accommodating cavity disposed in the first sub-holder, and a second accommodating cavity disposed in the second sub-holder; the first accommodating cavity and the second accommodating cavity are respectively used for accommodating at least part of the cells; and when the first sub-holder and the second sub-holder are abutted towards each other, the first accommodating cavity and the second accommodating cavity are communicated with each other, and wrap the cells along the lengthwise direction of the cells.

5. The battery pack according to claim 3 or 4, wherein the accommodating cavities are enclosed by an inner wall of the holder and are independent of each other; and each cell is correspondingly accommodated in the independent accommodating cavities respectively.

6. The battery pack according to claim 4, wherein a sealing element that is in contact with the outer side faces of the cells is arranged inside the accommodating cavity; a radial width of the sealing element is greater than or equal to a clearance between the outer side faces of the cells and the inner wall of the accommodating cavity; and the filler is located between the first sub-holder or the second sub-holder and the sealing element in the lengthwise direction of the cells.

7. The battery pack according to claim 1, wherein each cell is provided with a main body for longitudinal extension; the main body is distributed with an anode section and a cathode section along the lengthwise direction; and the filler is arranged in a clearance between the cathode section and/or the anode section and the inner wall of the accommodating cavity.

8. The battery pack according to claim 1, wherein several positioning elements extending towards the cells are convexly arranged on the inner wall of the accommodating cavity; and the positioning elements abut against the outer side faces of the cells.

9. The battery pack according to claim 8, wherein the positioning elements extend longitudinal along the cells; a mounting slot is formed between adjacent positioning elements; and the filler is arranged in the mounting slot.

10. The battery pack according to claim 1, wherein the filler comprises at least 2 different kinds of phase change materials, and melting ranges of the phase change materials are at least partially different.

11. The battery pack according to claim 1, wherein the filler comprises a phase change material that is in a solid state at a normal temperature; and the phase change material changes from the solid state to a liquid state in a heat-absorbing process, or maintains the solid state.

12. The battery pack according to claim 11, wherein a melting range of the phase change material is between 40°C and 70°C.

13. The battery pack according to claim 1, wherein a material of the filler comprises heat-conducting glue, a thermal conductivity of the heat-conducting glue is 1 to 3; and a unilateral thickness of the heat-conducting glue is 0-0.5 mm.

14. A manufacturing method for the battery pack according to claim 1, wherein in a case that the filler is in a solid state, the manufacturing method comprises:
assembling the filler with one of the cells and the holder in a predetermined manner to form a first assembly; and
assembling the first assembly with the other one of the cells and the holder to form a second assembly.
